Europäisches Patentamt

European Patent Office

Office européen des brevets

(19)

(11) Numéro de publication : **0 330 531 B1**

(12)

# FASCICULE DE BREVET EUROPEEN

(45) Date de publication du fascicule du brevet :
**15.04.92 Bulletin 92/16**

(51) Int. Cl.$^5$ : **B65G 51/02, B65G 53/58**

(21) Numéro de dépôt : **89400216.1**

(22) Date de dépôt : **26.01.89**

(54) **Dispositif d'alimentation en pièces à conduit de transfert.**

(30) Priorité : **22.02.88 FR 8802071**

(43) Date de publication de la demande :
**30.08.89 Bulletin 89/35**

(45) Mention de la délivrance du brevet :
**15.04.92 Bulletin 92/16**

(84) Etats contractants désignés :
**DE FR**

(56) Documents cités :
**EP-A- 0 043 117**
**DE-A- 1 531 927**
**DE-A- 3 336 709**
**DE-A- 3 438 774**

(73) Titulaire : **OTALU S.A.**
**Z.I. de l'Albanne Route d'Apremont**
**F-73490 La Ravoire (FR)**

(72) Inventeur : **Filc, Léon**
**7, rue Romain Rolland**
**F-26100 Romans (FR)**
Inventeur : **Meillat, Gérard Le Récamier**
**25bis, rue Buisson Rond Barberaz**
**F-73000 Chambery (FR)**
Inventeur : **Roybon, Claude**
**7 Allée de Sharby**
**F-74000 Annecy le Vieux (FR)**

(74) Mandataire : **Bourgognon, Jean-Marie et al**
**Cabinet Flechner 22, Avenue de Friedland**
**F-75008 Paris (FR)**

EP 0 330 531 B1

Jouve, 18, rue Saint-Denis, 75001 PARIS

## Description

La présente invention est relative aux dispositifs et procédés d'alimentation en pièces, notamment de petites dimensions, telles que des écrous, des capsules ou autres, comme décrit dans la première partie de la revendication 1. Un tel dispositif est connu par le DE-A-1 531 927.

Un dispositif d'alimentation en pièces de ce type peut permettre d'alimenter un outil de pose à des cadences très rapides de plusieurs dizaines de pièces à la minute. La masse que représente le conduit empli de pièces devient gênante lorsque la distance entre le bac de stockage et de poste de travail augmente, surtout lorsqu'il faut contourner des obstacles et lorsque l'outil de pose a une course importante.

L'invention pallie ces inconvénients par un dispositif d'alimentation qui permet d'augmenter encore les cadences, d'alléger la masse du conduit lorsque le dispositif d'alimentation fonctionne, de prévenir tout coincement des pièces dans le conduit, tout en s'accommodant avec avantage d'une présentation indexée des pièces dès leur sortie du bac de stockage.

Le dispositif d'alimentation suivant l'invention est caractérisé par les dispositions indiquées à la deuxième partie de la première revendication.

Une pièce introduite dans le conduit, par exemple par l'intermédiaire d'un distributeur, est aspirée dans celui-ci jusqu'au niveau où débouche l'ajutage par le jet d'air projeté par celui-ci, puis est propulsée dans la partie aval du conduit, sous l'effet de la pression du courant d'air provenant de l'ajutage. Dès qu'une pièce se trouve en butée en aval de l'emplacement du conduit où débouche l'ajutage, elle constitue un obstacle à l'évacuation du courant d'air, en sorte que la pression a tendance à augmenter entre la pièce et l'emplacement où débouche l'ajutage, et à contrecarrer l'effet de la pression de courant d'air provenant de l'ajutage. Il s'ensuit qu'une autre pièce se trouvant en amont de cet emplacement ou dans le bac de stockage n'est plus aspirée et ne l'est à nouveau que lorsque l'obstacle a disparu, c'est-à-dire lorsque la pièce qui se trouve en aval de l'emplacement a été évacuée. Dans certains cas, le dispositif d'alimentation permet donc d'obtenir une alimentation pièce par pièce. En tout cas, le nombre de pièces qui s'accumulent dans le conduit est toujours suffisamment petit pour que le conduit ne soit presque pas empli de pièces en fonctionnement et soit donc très léger. De préférence, un orifice de mise à l'air libre est prévu dans le conduit à proximité de la butée, par exemple à une distance de celle-ci correspondant à la dimension de 3 à 8 pièces. La contrepression ne s'établit que quand 3 à 8 pièces se sont accumulées devant la butée et bouchent cet orifice. La cadence d'alimentation peut être ainsi rendue très grande. Il est avantageux que la section droite du conduit corresponde à celles des pièces, au jeu près permettant leur déplacement dans le conduit. L'obstacle constitué par une pièce dans le conduit est ainsi très efficace. En outre, lorsque la pièce ne se déplace pas dans le conduit suivant l'un de ses axes de révolution, elle se trouve indexée dès la sortie du bac de stockage en une position définie.

De préférence, l'inclinaison de l'ajutage, par rapport au conduit, est comprise entre 10 et 30° et la pression du gaz projetée par l'ajutage est comprise entre 3 et 6 bar, avec possibilité de prévoir plusieurs ajutages échelonnés le long du conduit, alimentés sous des pressions d'air croissantes, au fur et à mesure qu'ils sont plus éloignés du bac de stockage.

Au dessin annexé, donné uniquement à titre d'exemple :

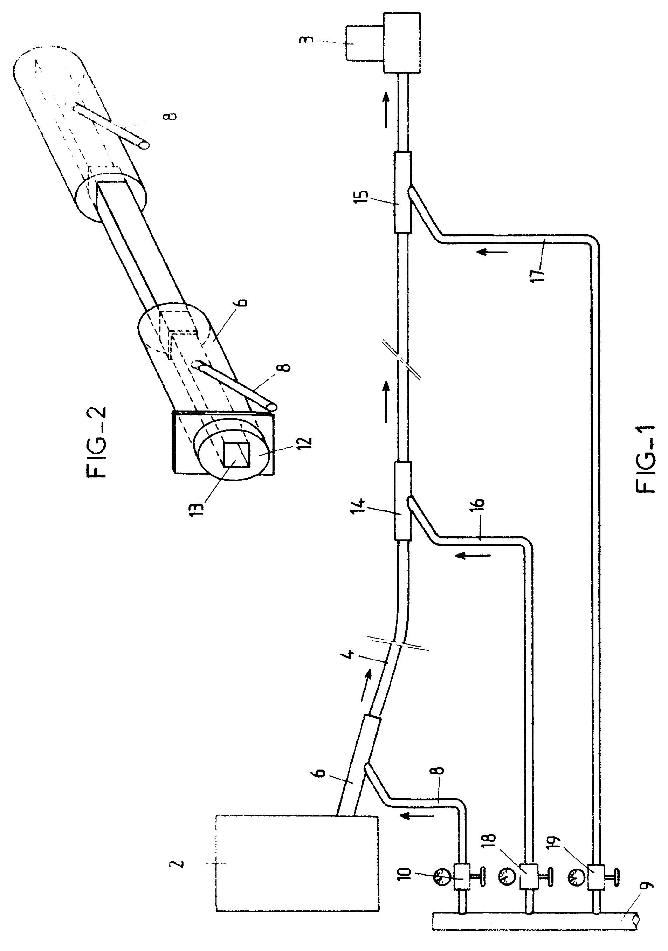

La figure 1 est une vue de côté du dispositif suivant l'invention ;

La figure 2 est une vue en perspective éclatée de l'extrémité amont du conduit ;

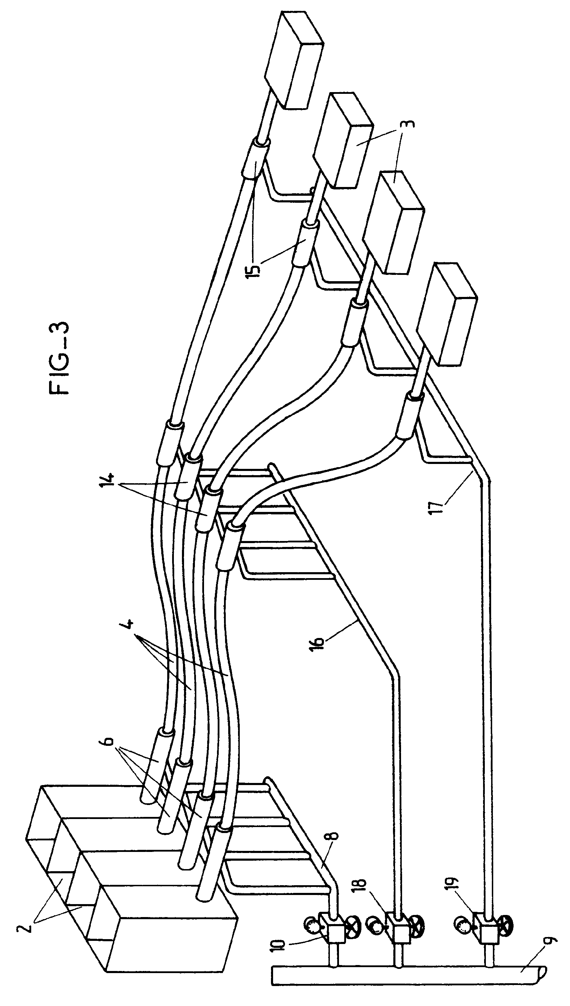

La figure 3 est une vue en perspective du dispositif ;

La figure 4 est une vue en coupe de l'outil de pose et du dispositif de libération des pièces une à une, avant la pose ; et

La figure 5 est une vue semblable à la figure 4, pendant la pose.

Le dispositif représenté au dessin est destiné à faire passer des écrous, de quatre bacs de stockage 2 à quatre postes 3 de pose des écrous, constitués par exemple par des presses.

Chaque bac de stockage 2 est équipé d'un distributeur, non représenté, destiné à prélever chaque pièce une à une et à la présenter, sous une orientation déterminée, à un conduit 4 horizontal réalisé en un matériau semi-souple, de façon à pouvoir subir certaines courbures, présentant une section droite intérieure 5 polygonale à la forme des écrous, en l'occurence carrée, dans la forme d'exécution représentée au dessin, afin d'assurer un blocage en rotation des pièces lors de leur passage en translation dans ce conduit.

L'extrémité en amont de chaque conduit 4 est raccordée à un raccord 6 métallique, dans lequel débouche un ajutage 8 qui est incliné en direction de l'extrémité aval du conduit. Cet ajutage 8 est alimenté en air sous pression à partir d'une source 9, un mano-détendeur 10 étant prévu sur l'ajutage 8 pour assurer l'amenée d'air sous pression constante. L'extrémité amont du raccord 4 est fermée par une plaque 12 comportant un orifice 13 en communication avec l'intérieur du conduit, la section droite de cet orifice 13 correspondant à la section des pièces à véhiculer.

Le conduit est muni de deux autres raccords 14 et 15, similaires au raccord 6 et alimentés en air sous pression par des ajutages respectivement 16 et 17. Les ajutages 16 et 17 sont également reliés à la source 9 et sont équipés de mano-détendeurs 18 et 19, respectivement. Les pressions à l'intérieur des ajutages 8, 16 et 17 sont telles que la pression de l'ajutage 16 est supérieure à celle dans l'ajutage 8 et que celle dans l'ajutage 17 est supérieure à celle dans l'ajutage 16.

Une pièce amenée par le distributeur devant à l'orifice 13 est aspirée par l'injection d'air en 8 puis, après avoir dépassé l'emplacement où débouche l'ajutage 8, elle est propulsée par la pression du courant d'air provenant de l'ajutage 8, cette pièce étant ensuite véhiculée par aspiration et par pression d'air successivement par les systèmes 14 et 15 jusqu'à des pinces 23 servant de butée et faisant partie du poste de pose.

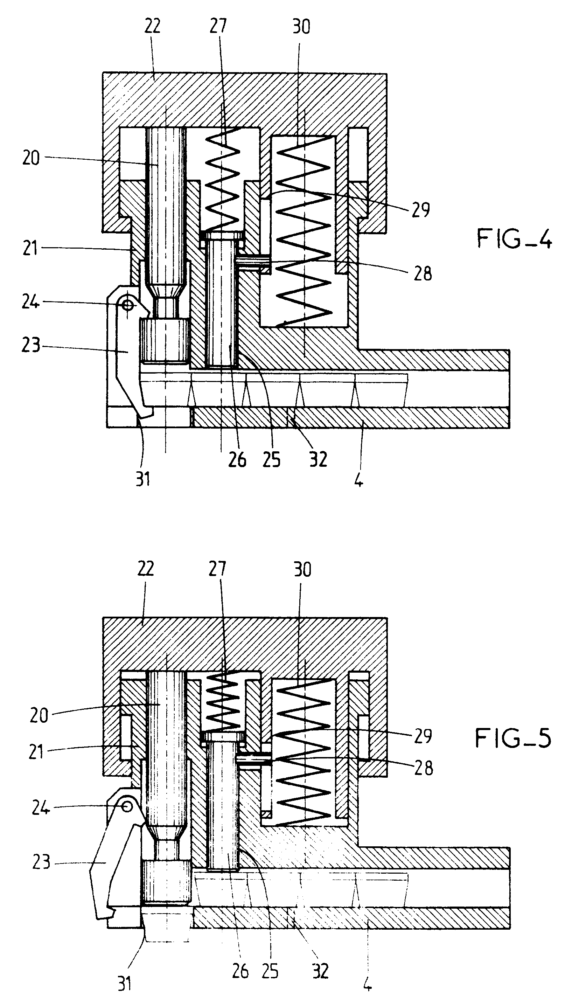

Ce poste de pose des pièces, schématisé aux figures 4 et 5, comporte un piston 20 coulissant dans un cylindre 21. L'une des extrémités du piston 20 est en contact avec une tête 22, susceptible de coulisser verticalement sous l'effet d'un poussoir non représenté, tandis que l'extrémité inférieure du piston 20 n'est pas en contact avec la pièce qui vient de sortir du conduit 4 et qui est maintenue par des pinces 23 articulées autour d'un axe 24. Dans la pièce 21 ménageant le cylindre, est constitué également un cylindre 25 dans lequel peut se déplacer un piston 26, dont l'extrémité supérieure est reliée à la tête 22 par l'intermédiaire d'un ressort 27. Le piston 26 est muni d'un doigt latéral 28 qui passe dans un passage de la pièce 21 et qui passe dans une fenêtre latérale 29 de la pièce 21. Un ressort 30 maintient la tête 22 vers le haut, lorsque le poussoir non représenté n'exerce pas une force suffisante.

Le bas du piston 26 est à la verticale de la pièce qui se trouve à l'extrémité en aval du conduit 4.

A la figure 4, la pièce se trouvant sous le piston 20 est maintenue par les pinces 23 qui jouent le rôle de butée formant obstacle.Lorsque la tête 22 est abaissée, les pinces 23 commandées par le mouvement de descente du piston 20, basculent et libèrent la pièce qui tombe dans une goulotte 31. Juste avant l'ouverture des pinces, le piston 26 presse, sous l'effet du ressort 27, la pièce qui est la plus en aval dans le conduit 4 et l'immobilise ainsi en l'empêchant de basculer ou d'être poussée à la place que la pièce, qui était maintenue par les pinces 23, vient de quitter. Lorsque l'on cesse d'appuyer sur la tête 22, le ressort 30 fait remonter la tête 22 et en conséquence, le ressort 27 repousse moins le piston 26 vers le bas. Celui-ci desserre la pièce qu'il maintenait immobile, et celle-ci peut prendre la place de la pièce qui vient de tomber dans la goulotte, en étant maintenue par les pinces 23 qui sont revenues en position de maintien, lorsque la tête 22 est remontée; ainsi que le piston 20.

Un orifice 32 ménagé dans le conduit 4 à proximité du poste de pose permet de mettre le conduit à l'air libre, tant que trois pièces ne se sont pas accumulées et que la troisième ne la bouche pas.

**Revendications**

1. Dispositif d'alimentation en pièces de petites dimensions, telles que des écrous, des capsules, comprenant un bac de stockage (2), un conduit (4) dont l'extrémité en amont débouche dans le bac de stockage (2), un ajutage (8) qui communique avec une source (9) de gaz sous pression et qui débouche, dans le conduit (4), en un emplacement intermédiaire, en étant incliné par rapport au conduit (4) dans la direction opposée au bac de stockage (2), caractérisé en ce que le conduit a une section droite correspondant à celles des pièces,au jeu près permettant le déplacement de celles-ci dans le conduit (4) et l'agencement étant tel qu'une pièce se trouvant en aval dudit emplacement est propulsée jusqu'à une butée (23), cette pièce ainsi arrêtée, constituant alors un obstacle à l'évacuation du courant de gaz et provoquant une contrepression interdisant à d'autres pièces de pénétrer dans le conduit (4) en amont dudit emplacement.

2. Dispositif suivant la revendication 1, caractérisé par un orifice (32) ménagé dans le conduit (4) à une distance de la butée (23) correspondant à la dimension de 3 à 8 pièces.

3. Dispositif suivant la revendication 1, caractérisé en ce que l'ajutage (8) est incliné d'un angle de 10 à 30°.

4. Dispositif suivant l'une des revendications précédentes, caractérisé en ce qu'il comprend plusieurs ajutages (8,16,17) débouchant le long du conduit (4).

5. Dispositif suivant l'une des revendications précédentes, caractérisé par un dispositif de libération des pièces une à une, qui est monté à la sortie du conduit (4).

6. Dispositif suivant la revendication 5, caractérisé par des moyens de synchronisation du dispositif de libération et d'un outil de pose des pièces.

7. Procédé d'alimentation en pièces de petites dimensions, caractérisé en ce qu'il consiste à utiliser un dispositif suivant l'une des revendications précédentes et à régler la pression du fluide dans l'ajutage en fonction des pièces de manière à provoquer une contrepression en amont d'une pièce se trouvant en aval dudit emplacement qui interdit à d'autres pièces de pénétrer dans le conduit en amont de l'emplacement tant que la pièce se trouvant en aval n'a pas quitté le conduit.

8. Procédé d'alimentation en pièces, caractérisé en ce qu'il consiste à utiliser un dispositif suivant la revendication 5, et à envoyer du gaz sous pression dans chaque ajutage, la pression du gaz dans un premier ajutage étant supérieure à celle du gaz dans un second ajutage disposé en amont du premier.

**Patentansprüche**

1. Vorrichtung zur Versorgung klein dimensionierter Teile, wie Schrauben, Kapseln, bestehend aus einem Lagerbehälter (2), einem Rohr (4), dessen stromaufwärts gelegenes Ende in den Lagerbehälter (2) mündet, einem Rohransatz (8), der mit einer Druckgasquelle (9) verbunden ist und der an einer Zwischenstelle in einer in Bezug zum Rohr (4) schrägen und zum Lagerbehälter (2) entgegengesetzten Richtung in das Rohr (4) mündet, dadurch gekennzeichnet, daß das Rohr einen den Teilen entsprechenden geradlinigen Querschnitt hat, der mit geringem Spiel deren Verschiebung im Rohr erlaubt und eine solche Anordnung vorgesehen ist, daß ein stromabwärts von der genannten Zwischenstelle befindliches Teil bis zu einem Anschlag (23) vorwärtsgetrieben wird, der das Teil derart arretiert, daß es eine Sperre gegen ein Evakuieren des Gasstroms bildet und einen Gegendruck aufbaut, der das Eindringen anderer Teile in das Rohr (4) stromaufwärts von der genannten Stelle verbietet.

2. Vorrrichtung nach Anspruch 1, gekennzeichnet durch eine Öffnung (32) in dem Rohr (4), die in einem Abstand vom Anschlag (23) entsprechend der Abmessung von 3 bis 8 Teilen angeordnet ist.

3. Vorrichtung nach Anspruch 1, dadurch gekennzeichnet, daß der Rohransatz (8) mit einem Winkel von 10 bis 30° geneigt ist.

4. Vorrichtung nach einem der vorstehenden Ansprüche, dadurch gekennzeichnet, daß diese mehrere Rohransätze (8, 16, 17) aufweist, die längs des Rohres (4) einmümden.

5. Vorrichtung nach einem der vorstehenden Ansprüche, gekennzeichnet durch eine am Ausgang des Rohres (4) angeordnete Vorrichtung zur stückweisen Freigabe der Teile.

6. Vorrichtung nach Anspruch 5, gekennzeichnet durch Mittel zur Synchronisation der Vorrichtung zur Freigabe und eines Werkzeugs zum Setzen der Teile.

7. Verfahren zur Versorgung klein dimensionierter Teile, gekennzeichnet durch die Verwendung einer Vorrichtung nach einem der vorhergehenden Ansprüche und durch die Regelung des Fluiddrucks im Rohransatz gemäss der Teile derart, dass stromaufwärts eines von der genannten Stelle stromabwärts befindlichen Teils ein Gegendruck aufgebaut wird, der verhindert, dass andere Teile anströmseitig von der genannten Stelle in das Rohr gelangen, bis das stromabwärts befindliche Teil das Rohr verlässt.

8. Verfahren zur Versorgung von Teilen, gekennzeichnet durch die Verwendung einer Vorrichtung nach Anspruch 5 und durch die Abgabe von Druckgas in jedem Rohransatz, wobei der Gasdruck in einem ersten Rohransatz höher ist als in einem zweiten, stromabwärts von derm ersteren angeordneten Rohransatz.

**Claims**

1. Device for supplying parts with small dimensions, such as nuts and capsules, comprising a storage vessel (2), a pipe (4), the upstream end of which opens into the storage vessel (2), a nozzle (8) which is connected to a source (9) of pressurised gas and which opens into the pipe (4) at an intermediate location, being inclined with respect to the pipe (4) away from the storage vessel (2), characterised in that the pipe has a cross-section corresponding to those of the parts, apart from the clearance enabling the latter to move in the pipe (4), and the arrangement being such that a part situated downstream of the said location is propelled as far as a catch (23), this part, once it has been stopped, then constituting an obstacle to the discharge of the stream of gas and causing a counter-pressure preventing other parts from penetrating into the pipe (4) upstream of the said location.

2. Device according to Claim 1, characterised by an orifice (32) made in the pipe (4) at a distance from the catch (23) which corresponds to the dimension of 3 to 8 parts.

3. Device according to Claim 1, characterised in that the nozzle (8) is inclined by an angle of 10 to 30°.

4. Device according to one of the preceding claims, characterised in that it comprises a plurality of nozzles (8, 16, 17) opening out into the pipe (4) along its length.

5. Device according to one of the preceding claims, characterised by a device for releasing the parts one by one, which is mounted at the exit from the pipe (4).

6. Device according to Claim 5, characterised by means for synchronising the releasing device and for synchronising a tool for installing the parts.

7. Method for supplying parts with small dimensions, characterised in that it consists in using a device according to one of the preceding claims and in regulating the pressure of the fluid in the nozzle as a function of the parts so as to cause a counter-pressure upstream of a part situated downstream of the said location which prevents other parts from penetrating into the pipe upstream of the location as long as the part situated downstream has not left the pipe.

8. Method for supplying parts, characterised in that it consists in using a device according to Claim 5, and in sending pressurised gas into each nozzle, the pressure of the gas in a first nozzle being greater than that of the gas in a second nozzle arranged upstream of the first.

FIG_2

FIG_1

EP 0 330 531 B1

FIG—3

FIG_4

FIG_5